# EUROPÄISCHE PATENTSCHRIFT

(11) **EP 1 516 696 B1**
(45) Veröffentlichungstag und Bekanntmachung des Hinweises auf die Patenterteilung: **02.05.2007**
(21) Anmeldenummer: 03021268.2
(22) Anmeldetag: 19.09.2003
(51) Int. Cl.: B23Q 7/00, B23Q 17/20, B23D 47/04, B23B 13/02, G01B 11/02

(54) **Zuführvorrichtung für stangen- oder stabartige Werkstücke sowie maschinelle Anordnung mit einer derartigen Zuführvorrichtung**
Bar feeder and machine assembly with such a bar feeder
Embarreur et machine contenant un tel embarreur

(43) Veröffentlichungstag der Anmeldung: 23.03.2005
(73) Patentinhaber: TRUMPF Werkzeugmaschinen GmbH + Co. KG, 71254 Ditzingen (DE)
(72) Erfinder: Dilger, Werner, 71229 Leonberg (DE); Stückel, Markus, 71254 Ditzingen (DE); Reinwald, Simon, 75365 Calw-Hirsau (DE)
(74) Vertreter: Kohler Schmid Möbus

(56) Entgegenhaltungen:
- DE-A- 4 444 787
- US-A- 5 970 830
- PATENT ABSTRACTS OF JAPAN vol. 1998, no. 02, 30. Januar 1998 (1998-01-30) & JP 09 277136 A (ALPS TOOL:KK), 28. Oktober 1997 (1997-10-28)

## Beschreibung

Die Erfindung betrifft eine Zuführvorrichtung für stangen- oder stabartige Werkstücke, insbesondere für Rohre, mit einer Werkstüclchalterung, an welcher ein Werkstück festlegbar und die mit dem daran festgelegten Werkstück mit einer Zuführbewegung längs eines Verfahrweges bewegbar ist sowie mit einer Erfassungseinrichtung zur Erfassung wenigstens eines Endes und/oder der Länge des in einer Warteposition außerhalb des Verfahrweges der werkstückhalterung angeordneten Werkstückes. Die Erfindung betrifft des Weiteren eine maschinelle Anordnung zum Bearbeiten von stangen- oder stabartigen Werkstücken, insbesondere von Rohren, mit einer Bearbeitungseinrichtung sowie einer Zuführvorrichtung, mittels derer die zu bearbeitenden Werkstücke der Bearbeitungseinrichtung zuführbar sind.

Aus US 5, 970, 830 A ist eine Zuführvorrichtung für Stangen an einer Drehmaschine bekannt. Eine drehbare Spannzange der Zuführvorrichtung dient dazu, eine zu bearbeitende Stange gegenüber der Bearbeitungseinrichtung der Drehmaschine zu positionieren und ist zu diesem Zweck gegenüber der Bearbeitungseinrichtung der Drehmaschine vor und zurück verfahrbar. Zu Beginn eines Bearbeitungsganges ist die betreffende Stange in einem Stangenmagazin und dabei außerhalb des Verfahrweges der drehbaren Spannzange in einer Warteposition angeordnet. Von dort wird die Stange mittels einer Transfereinrichtung in den Verfahrweg der drehbaren Spannzange transportiert. Eine Spanneinrichtung erfasst die Stange anschließend und führt sie mit ihrem rückwärtigen, von der Drehmaschine abliegenden Ende in die drehbare Spannzange ein. Die Ausgangsposition der Stange in Richtung ihrer Zustellbewegung gegenüber der Drehmaschine wird durch einen Anschlag für das vordere, drehmaschinenseitige Ende der Stange definiert. An diesen Anschlag wird die an ihrem rückwärtigen Ende von der drehbaren Spannzange gehaltene Stange durch Vorwärtsbewegung der drehbaren Spannzange angelegt. Damit nimmt die Stange ihre Ausgangsposition für die nachfolgende Bearbeitung ein. Die Ausgangsposition der Stange bzw. die damit verbundene Ausgangsposition der drehbaren Spannzange wird in einer Steuerung der Zuführvorrichtung hinterlegt. Der Anschlag für die Stange wird danach aus dem Weg der Stange herausgeschwenkt und die Stange wird durch die sich in Richtung auf die Drehmaschine bewegende drehbare Spannzange der Bearbeitungseinrichtung der Drehmaschine zugeführt. Eine Erfassungseinrichtung zur Erfassung eines Endes und/oder der Länge eines in einer Warteposition befindlichen Werkstückes ist in US 5,970,830 A nicht offenbart.

Gattungsgemäßen Stand der Technik bildet die unter der Bezeichnung TUBEMATIC^{®} vertriebene Rohrschneidanlage der Firma TRUMPF, 71254 Ditzingen (Deutschland). Die Zuführvorrichtung der vorbekannten Anlage umfasst eine Beladeeinheit sowie eine Dreh- und Vorschubstation. An der Beladeeinheit werden zu bearbeitende Werkstücke in eine Warteposition gefördert, von der aus sie einzeln an die Dreh- und Vorschubstation übergeben werden. Zur Übergabe an die Dreh- und Vorschubstation wird das betreffende Werkstück ausgehend von seiner Warteposition parallel zu sich selbst in Werkstückquerrichtung in eine Übergabeposition bewegt. In der Übergabeposition befindet sich das Werkstück im Verfahrweg der Dreh- und Vorschubstation. Die Dreh- und Vorschubstation wird zuvor längs des in der Warteposition angeordneten Werkstückes in eine Position verfahren, in welcher sie von dem an ihr zu fixierenden hinteren Ende des seine Übergabeposition einnehmenden Werkstückes geringfügig beabstandet ist. Zum Ergreifen des ihr zugewandten Werkstückendes verfährt die Dreh- und Vorschubstation zu dem Werkstückende hin. Mit dem daran gehaltenen Werkstück bewegt sich die Dreh- und Vorschubstation in Richtung auf die Bearbeitungseinrichtung der Anlage.

Die vorbekannte Anlage wird mit Hilfe einer CNC-Steuerung betrieben. Rechnergesteuert erfolgt beispielsweise die Bewegung der Dreh- und Vorschubstation in diejenige Position, von der ausgehend das betreffende Werkstück an der Dreh- und Vorschubstation zu fixieren ist. Die Definition der von der Dreh- und Vorschubstation anfänglich einzunehmenden Position erfolgt unter Berücksichtigung der Länge des an die Dreh- und Vorschubstation zu übergebenden Werkstückes. U.a. zu diesem Zweck muss die Werkstücklänge erfasst werden. Dies geschieht im Falle des Standes der Technik mittels einer an der Beladeeinheit vorgesehenen Erfassungseinrichtung. Diese umfasst einen zu der Bearbeitungseinrichtung hin gelegenen Anschlag sowie einen mit einem Drucksensor versehenen Zahnriemenantrieb. Mittels des Zahnriemenantriebes wird das zu vermessende Werkstück an dem von der Bearbeitungseinrichtung abliegenden Ende in Werkstücklängsrichtung beaufschlagt und gegen den an dem gegenüberliegenden Werkstückende angeordneten Anschlag bewegt. Liegt das Werkstück an dem Anschlag an, so wird dies mittels des Drucksensors festgestellt. Anhand der Verfahrposition des Zahnriemenantriebes wird dann die Werkstücklänge bestimmt.

Aufgabe der vorliegenden Erfindung ist es, den gattungsgemäßen Stand der Technik dahingehend weiterzubilden, dass sich die Erfassung wenigstens eines Werkstückendes bzw. der Werkstücklänge vereinfacht.

Erfindungsgemäß gelöst wird diese Aufgabe durch die Zuführvorrichtung gemäß Patentanspruch 1 sowie durch die maschinelle Anordnung gemäß Patentanspruch 11. Im Falle der Erfindung ist demnach die Erfassungseinrichtung mit der Werkstückhalterung bewegungsverbunden, d.h. bewegungsmäßig gekoppelt. Eines separaten Antriebes für die Erfassungseinrichtung bedarf es nicht. Zudem lassen sich die Bewegungsmöglichkeiten der Werkstückhalterung für die Erfassungseinrichtung nutzen. Infolgedessen besteht erfindungsgemäß keine Notwendigkeit, Werkstücke zur Erfassung wenigstens eines ihrer Enden und/oder ihrer Länge in einer einheitlichen Erfassungsposition in Werkstücklängsrichtung anzuordnen. Vielmehr kann die Erfassungseinrichtung erfindungsgemäßer Zuführvorrichtungen mittels der Werkstückhalterung in eine Vielzahl unterschiedlicher Erfassungspositionen in Werkstücklängsrichtung bewegt werden.

Besondere Ausführungsarten der erfindungsgemäßen Zuführvorrichtung ergeben sich aus den abhängigen Patentansprüchen 2 bis 10, besondere Ausführungsarten der erfindungsgemäßen maschinellen Anordnung aus den abhängigen Patentansprüchen 12 bis 14.

Das kennzeichnende Merkmal von Patentanspruch 2 bedingt kinematisch einfache Verhältnisse an erfindungsgemäßen Zuführvorrichtungen. Die von der Werkstückhalterung gemeinschaftlich mit dem Werkstück ausgeführte Zuführbewegung und die von der Werkstückhalterung mit der Erfassungseinrichtung ausgeführte Erfassungsbewegung sind gleichachsig.

Gemäß Patentanspruch 3 sind in weiterer Ausgestaltung der Erfindung die Zuführbewegung und die Erfassungsbewegung der Werkstückhalterung gleichachsig aber gegenläufig. Daraus resultiert ein zeitoptimierter Betrieb erfindungsgemäßer Zuführvorrichtungen. Nach Beendigung einer mit einem Werkstück ausgeführten Zuführbewegung ist die Werkstückhalterung entgegen der Richtung der Zuführbewegung zu bewegen, um ein weiteres, zu diesem Zeitpunkt noch in der Warteposition befindliches Werkstück aufzunehmen. Diese Rückbewegung der Werkstückhalterung wird erfindungsgemäß zur Erfassung wenigstens eines Endes und/oder der Länge des in der Warteposition angeordneten Werkstücks genutzt.

Die Patentansprüche 4 und 5 beschreiben Bauarten der erfindungsgemäßen Zuführvorrichtung, die sich durch eine bewährte und funktionssichere Gestaltung der verwendeten Erfassungseinrichtung auszeichnen. Grundsätzlich ist die Abtasteinrichtung, insbesondere die Lichtschranke, in Werkstück-Umfangsrichtung beliebig gegenüber dem Werkstück anordenbar.

Die Patentansprüche 6 bis 10 betreffen Ausführungsformen der Erfindung, im Falle derer besondere Maßnahmen zur Gewährleistung einer möglichst fehlerfreien Werkstückenden- bzw. Werkstücklängenerfassung getroffen sind.

Die Erfindungsbauarten nach den Patentansprüchen 6 bis 8 berücksichtigen, dass zuzuführende und zu erfassende Werkstücke mit ihrem Ist- von ihrem Sollverlauf in Werkstücklängsrichtung abweichen, beispielsweise unerwünschte Biegungen aufweisen können.

Bei Verwendung der Erfassungseinrichtung gemäß Patentanspruch 6 ist eine fehlerfreie Erfassung eines oder beider Werkstückenden bzw. der Werkstücklänge ungeachtet unerwünschter Werkstückverformungen möglich.

Selbst bei Verwendung einer Erfassungseinrichtung nach Patentanspruch 6 kann der Taster bei hinreichend ausgeprägter Krümmung des Werkstückes mit dem Werkstück außer Kontakt kommen, noch ehe er das an sich zu erfassende Werkstückende erreicht hat. Eine daraus resultierende Fehlerfassung des Werkstückendes und gegebenenfalls auch eine Fehlerfassung der Werkstücklänge lässt sich mit Hilfe der Verlaufskontrolleinrichtung nach den Patentansprüchen 7 und 8 verhindern. Mit Hilfe der Verlaufskontrolleinrichtung werden das Erfassungsergebnis verfälschende Abweichungen des tatsächlichen Verlaufs von dem Sollverlauf des zu erfassenden Werkstücks in Werkstücklängsrichtung festgestellt. Die vorgenommene Erfassung kann somit als fehlerhaft erkannt werden.

Gemäß Patentanspruch 9 wird vermieden, dass ein zu erfassendes Werkstückende auf einem Werkstückauflager zu liegen kommt und dabei mit Abstand von einer in Werkstücklängsrichtung gelegenen Begrenzung des Werkstückauflagers angeordnet ist. Wäre dies der Fall, so bestünde die Gefahr, dass die verwendete Abtasteinrichtung den Überstand, mit welchem das Werkstückauflager gegenüber dem Werkstück in Werkstücklängsrichtung vorragt, irrtümlicherweise als Teil des Werkstückes wahrnimmt und als Werkstückende die in Richtung der Erfassungsbewegung gelegene Begrenzung des Werkstückauflagers erfasst.

Eine Positionierhilfe zur Vermeidung einer derartigen Fehlfunktion der Erfassungseinrichtung wird an der erfindungsgemäße Zuführvorrichtung gemäß Patentanspruch 10 mit besonders einfachen Mitteln bereitgestellt.

Maschinelle Anordnungen, im Falle derer sich die Umsetzung des erfindungsgemäßen Konzeptes als besonders zweckmäßig erweist, sind Gegenstand der Patentansprüche 12 bis 14.

Nachstehend wird die Erfindung anhand schematischer Darstellungen zu einem Ausführungsbeispiel näher erläutert. Es zeigen:
- Fig. 1: eine maschinelle Anlage zum schneidenden Bearbeiten von Rohren in einer perspektivischen Gesamtansicht,
- Fig. 2: die maschinelle Anlage nach Fig. 1 in der Draufsicht,
- Fig. 3: die maschinelle Anlage nach den Fign. 1 und 2 in der Vorderansicht,
- Fig. 4: die maschinelle Anlage nach den Fign. 1 bis 3 in der Seitenansicht,
- Fig. 5: stark schematisierte Darstellungen zur Erläuterung der Funktionsweise einer im Falle der maschinellen Anordnung nach den Fign. 1 bis 4 vorgesehenen Lichtschranke und
- Fig. 6: eine stark schematisierte Darstellung zur Erläuterung der Funktionsweise einer Verlaufskontrolleinrichtung.

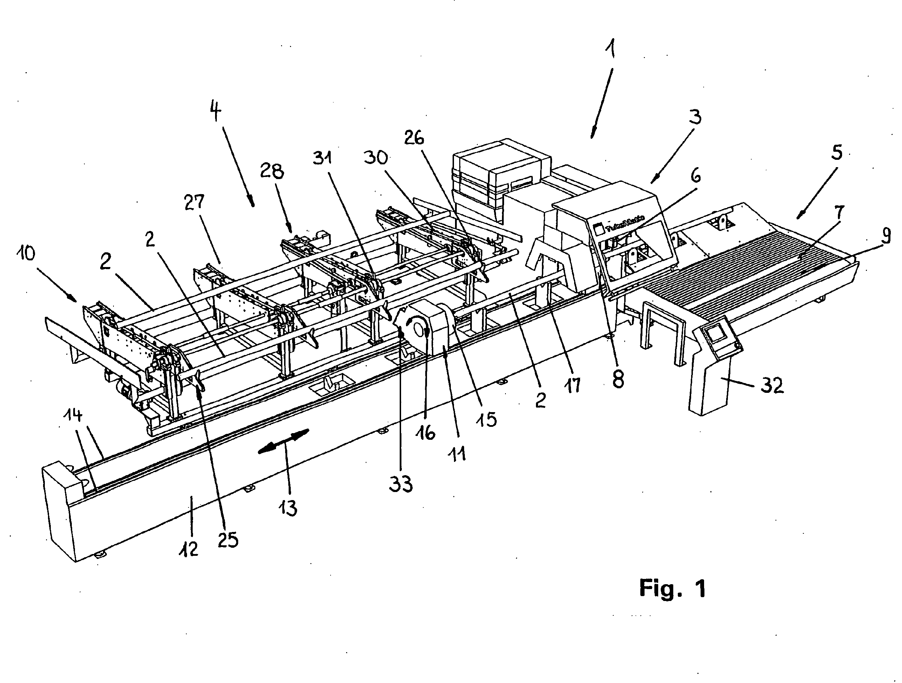

Gemäß Fig. 1 umfasst eine maschinelle Anlage 1 zum schneidenden Bearbeiten von Werkstücken, im dargestellten Fall von Rohren 2, eine Bearbeitungseinrichtung in Form einer Laserschneidstation 3, eine Zuführvorrichtung 4 sowie eine Ausschleusstation 5.

An der Laserschneidstation 3 ist ein Laserschneidkopf 6 vorgesehen, mit dem von den Rohren 2 Rohr-Teilstücke 7 abgelängt werden. Nahe der Bearbeitungsstelle ist das jeweils zu bearbeitende Rohr 2 in einem Durchschiebefutter 8 gelagert. Die abgelängten Rohr-Teilstücke 7 werden an der Ausschleusstation 5 an einen Auflagetisch 9 übergeben. An dem Auflagetisch 9 können die Rohr-Teilstücke 7 aus der maschinellen Anlage 1 entnommen werden. Die wesentlichen Funktionen der maschinellen Anlage 1 sind CNC-gesteuert.

Komponenten der Zuführvorrichtung 4 sind eine Beladeeinheit 10 sowie eine als Dreh- und Vorschubstation 11 ausgebildete Werkstückhalterung.

Mittels der Dreh- und Vorschubstation 11 werden die zu bearbeitenden Rohre 2 gegenüber dem Laserschneidkopf 6 der Laserschneidstation 3 in der für die Bearbeitung erforderlichen Weise bewegt. Im Einzelnen werden die zu bearbeitenden Rohre 2 mittels der Dreh- und Vorschubstation 11 gegenüber dem Laserschneidkopf 6 in Rohrlängsrichtung nachgesetzt und zur Erstellung des Trennschnittes um die Rohrlängsachse gedreht. Zur Bewegung in Rohrlängsrichtung ist die Dreh- und Vorschubstation 11 auf einem Maschinenbett 12 der maschinellen Anlage 1 in Richtung eines Doppelpfeils 13 verfahrbar. Zur Führung der Dreh- und Vorschubstation 11 bei der Verfahrbewegung dienen an dem Maschinenbett 12 angebrachte Führungsschienen 14. An der Dreh- und Vorschubstation 11 fixierbar ist das jeweils zu bearbeitende Rohr 2 mittels eines Spannfutters 15, das seinerseits in Richtung eines Doppelpfeils 16 um die Rohrachse gedreht werden kann.

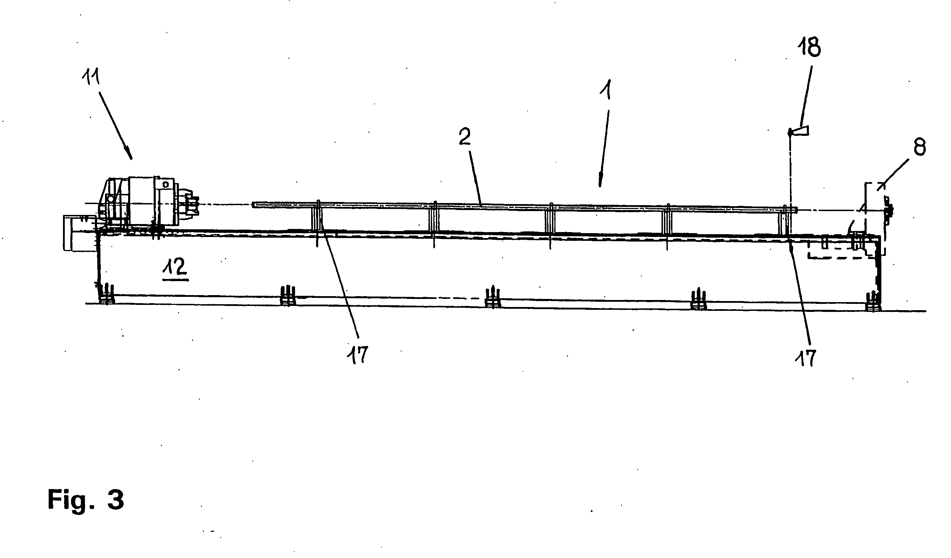

Zwischen der Dreh- und Vorschubstation 11 und dem Durchschiebefutter 8 sind die zu bearbeitenden Rohre 2 auf Rohrunterstützungen 17 gelagert. Mit fortschreitender Rohrbearbeitung werden die Rohrunterstützungen 17 nacheinander in das Maschinenbett 12 abgesenkt und können dann von der Dreh- und Vorschubstation 11 überfahren werden. Nahe derjenigen Rohrunterstützungen 17, welche dem Durchschiebefutter 8 am nächsten liegt, ist über dem Maschinenbett 12 ein in Fig. 3 angedeuteter Positionssensor 18 angeordnet. An der zu der Beladeeinheit 10 hin weisenden Seite ist die Dreh- und Vorschubstation 11 mit einer Erfassungseinrichtung 33 versehen, die in Fig. 1 lediglich ansatzweise erkennbar ist.

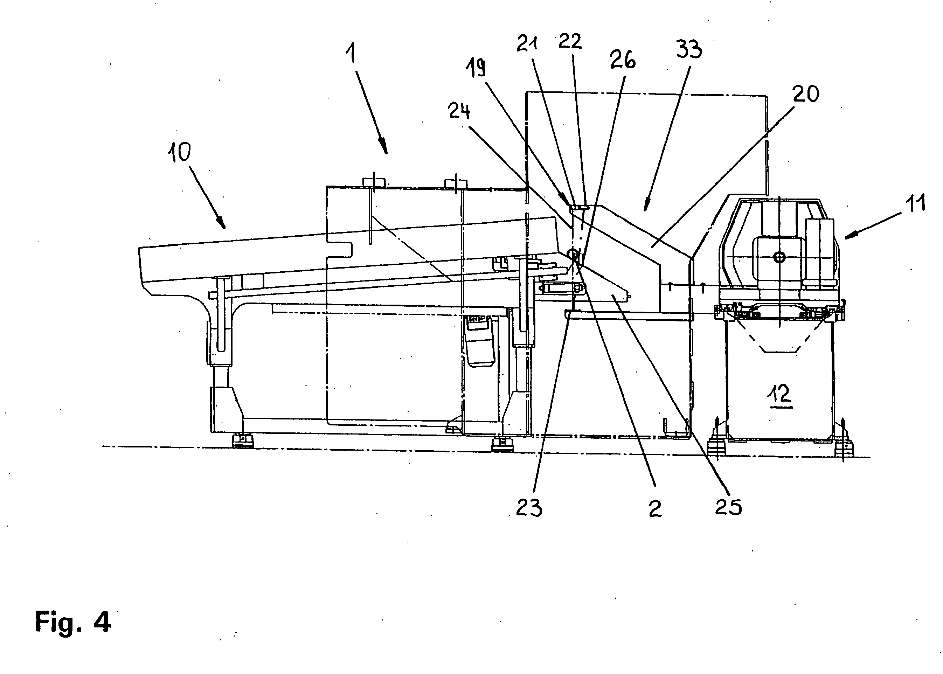

Ausweislich Fig. 4 weist die Erfassungseinrichtung 33 eine Lichtschranke 19 sowie einen zweiarmigen, seitlich von der Dreh- und Vorschubstation 11 vorragenden und ein Rohr 2 übergreifenden Lichtschrankenträger 20 auf. An dem oberen Arm des Lichtschrankenträgers 20 sind ein Strahlsender 21 sowie ein Strahlempfänger 22 angebracht. Der untere Arm des Lichtschrankenträgers 20 lagert einen Strahlreflektor 23. Einem Lichtstrahl der Lichtschranke 19 ist das Bezugszeichen 24 zugeordnet. Der Lichtstrahl 24 dient als Tast-Lichtstrahl zum Abtasten des dargestellten Rohrs 2 in Rohrquerrichtung. Eine von der gezeigten Anordnung in Rohrumfangsrichtung abweichende Anordnung der Lichtschranke 19 ist denkbar. Möglich ist insbesondere eine Anordnung der Lichtschranke 19 derart, dass sich der Strahlsender 21 und der Strahlempfänger 22 einerseits und der Strahlreflektor 23 andererseits an dem Rohr 2 in horizontaler Richtung gegenüberliegen.

Gemäß Fig. 1 ist ein an der Dreh- und Vorschubstation 11 mit seinem hinteren Ende eingespanntes Rohr 2 über einen Teil seiner Länge bearbeitet. Zwei Rohrunterstützungen 17 sind von der Dreh- und Vorschubstation 11 bereits überfahren worden. An der Beladeeinheit 10 ist das nächste zu bearbeitende Rohr 2 in einer Warteposition angeordnet. Das in der Warteposition befindliche Rohr 2 ist auf Werkstückauflagern in Form von ingesamt vier Übergabearmen 25 der Beladeeinheit 10 gelagert. Das Rohr 2 liegt dabei an bearbeitungsseitigen Anschlägen 26 an.

In die Warteposition ist das betreffende Rohr 2 ausgehend von einer Werkstückaufgabe 27 der Beladeeinheit 10 gelangt. An der Werkstückaufgabe 27 werden die zu bearbeitenden Rohre 2 von einem Bediener manuell auf eine Tragstruktur 28 der Beladeeinheit 10 aufgelegt. Alternativ kann die Beschickung der Tragstruktur 28 mit Rohren 2 auch mechanisiert erfolgen.

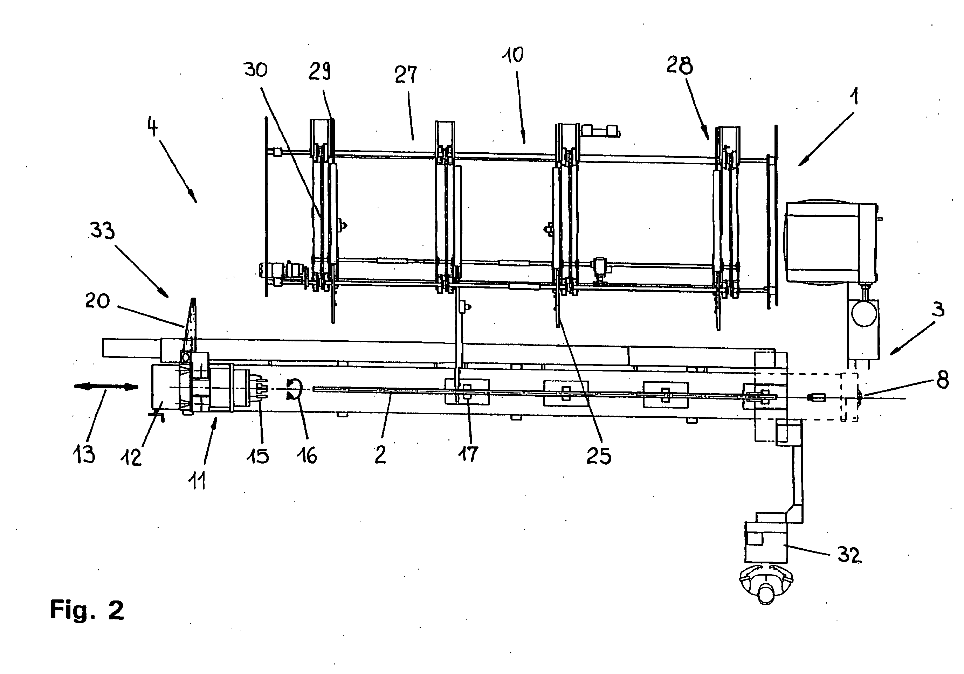

An der Werkstückaufgabe 27 sind die Rohre 2 in ihrer Längsrichtung derart zu positionieren, dass ihre von der Laserschneidstation 3 abgewandten hinteren Enden nicht innerhalb einer in Fig. 2 erkennbaren und als Anzeige dienenden Markierung 29 zu liegen kommen. Die Erstreckung der Markierung 29 in Rohrlängsrichtung stimmt mit der entsprechenden Erstreckung des hinteren der insgesamt vier Übergabearme 25 der Beladeeinheit 10 überein. In dem gezeigten Fall sind die Rohre 2 derart auf die Tragstruktur 28 aufgelegt worden, dass sie in der Warteposition mit dem betreffenden Ende gegenüber der Markierung 29 nach hinten vorstehen.

Die an der Werkstückaufgabe 27 auf die Tragstruktur 28 aufgelegten Rohre 2 werden mittels Förderketten 30 parallel zu sich selbst in Richtung auf das Maschinenbett 12 gefördert. Im Laufe ihrer Förderbewegung kommen die Rohre 2 einzeln und nacheinander an aufgabeseitigen Anschlägen 31 zur Anlage. Ebenso wie die bearbeitungsseitigen Anschläge 26 können auch die aufgabeseitigen Anschläge 31 durch entsprechende Schwenkbewegung das jeweils an ihnen anliegende Rohr 2 freigeben.

Ausgehend von den Verhältnissen gemäß Fig. 1 wird das an der Dreh- und Vorschubstation 11 eingespannte Rohr 2 über die verbleibende Restlänge bearbeitet. Zu diesem Zweck wird das eingespannte Rohr 2 durch Vorwärts- bzw. Zuführbewegung der Dreh- und Vorschubstation 11 gegenüber dem Laserschneidkopf 6 der Laserschneidstation 3 nachgesetzt und bei in Rohrlängsrichtung ortsfester Anordnung zur Erstellung des gewünschten Trennschnittes um die Rohrachse gedreht. Nach Beendigung der Bearbeitung des Rohres 2 befindet sich die Dreh- und Vorschubstation 11 in unmittelbarer Nähe des Durchschiebefutters 8. Die an der Dreh- und Vorschubstation 11 angebrachte Lichtschranke 19 liegt dabei in Rohrlängsrichtung gesehen zwischen der Laserschneidstation 3 und dem zu der Laserschneidstation 3 hin weisenden vorderen Ende des in der Warteposition angeordneten Rohres 2. Der Strahlsender 21 und der Strahlempfänger 22 befinden sich oberhalb, der Strahlreflektor 23 unterhalb des in der Warteposition angeordneten Rohres 2.

Ausgehend von diesem Betriebszustand wird die Lichtschranke 19 eingeschaltet und durch von der Laserschneidstation 3 weg gerichtete Bewegung der Dreh- und Vorschubstation 11 mit dieser verfahren. Im Laufe dieser Bewegung erreicht die Lichtschranke 19 zunächst das zu der Laserschneidstation 3 hin liegende vordere Ende des in der Warteposition angeordneten Rohres 2. Mit Erreichen des vorderen Rohrendes wird der Lichtstrahl 24 der Lichtschranke 19 unterbrochen. Durch die Strahlunterbrechung wird ein Steuersignal für die in einem Steuerpult 32 untergebrachte CNC-Steuerung der maschinellen Anlage 1 erzeugt. Aufgrund dieses Steuersignals wird der Ort der Strahlunterbrechung in Rohrlängsrichtung und somit die Lage des vorderen Endes des in der Warteposition angeordneten Rohres 2 erfasst. Bei der weiteren, von der Laserschneidstation 3 weg gerichteten Bewegung von Dreh- und Vorschubstation 11 und Lichtschranke 19 tastet der Lichtstrahl 24 der Lichtschranke 19 die Oberseite des in der Warteposition befindlichen Rohres 2 in Werkstückquerrichtung ab. Bei in etwa geradlinigem und zu der Achse der Bewegung von Dreh- und Vorschubstation 11 sowie Lichtschranke 19 parallelem Verlauf des Rohres 2 bleibt der Lichtstrahl 24 dabei über die gesamte Rohrlänge unterbrochen. Die Strahlunterbrechung endet, sobald der Lichtstrahl 24 das von der Laserschneidstation 3 abliegende hintere Ende des in der Warteposition angeordneten Rohres 2 erreicht. Mit Passieren des hinteren Rohrendes trifft der von dem Strahlsender 21 ausgesandte Lichtstrahl 24 auf den Strahlreflektor 23 und wird von diesem zu dem Strahlempfänger 22 hin umgelenkt. Mit Auftreffen des Lichtstrahls 24 auf den Strahlempfänger 22 wird ein weiteres Steuersignal für die CNC-Steuerung der maschinellen Anlage 1 erzeugt. Aufgrund dieses Steuersignals wird die Lage des hinteren Endes des in der Warteposition befindlichen Rohres 2 erfasst. Aus den erfassten Lagen der Rohrenden ermittelt die CNC-Steuerung der maschinellen Anlage 1 die Länge des in der Warteposition befindlichen Rohres 2.

Die Dreh- und Vorschubstation 11 wird auf den Führungsschienen 14 des Maschinenbettes 12 in die in Fig. 2 gezeigte Position verfahren. Anschließend werden die Übergabearme 25 der Beladeeinheit 10 mit dem darauf gelagerten Rohr 2 bis über das Maschinenbett 12 vorgeschoben. Das Rohr 2 befindet sich nun in seiner Übergabeposition, in welcher die Rohrachse mit der Achse des Spannfutters 15 an der Dreh- und Vorschubstation 11 zusammenfällt. Der Einfachheit halber ist in Fig. 2 lediglich einer der vier vorgeschobenen Übergabearme 25 in der vorgeschobenen Stellung gezeigt.

Die Dreh- und Vorschubstation 11 verfährt aus der Position nach Fig. 2 mit geöffnetem Spannfutter 15 zu dem zu übernehmenden Rohr 2 hin, bis das hintere Rohrende in das Spannfutter 15 einläuft. Durch Schließen des Spannfutters 15 wird nun das hintere Ende des Rohres 2 an der Dreh- und Vorschubstation 11 festgelegt. Die bearbeitungsseitigen Anschläge 21 an den Übergabearmen 25 werden in die Freigabestellung geschwenkt und die Übergabearme 25 werden in ihre Ausgangslage an der Tragstruktur 28 zurückgezogen. Durch entsprechende Betätigung der aufgabenseitigen Anschläge 31 wird ein an diesen anliegendes Rohr 2 freigegeben. Unter Schwerkraftwirkung bewegt sich das freigegebene Rohr 2 bis zur Anlage an den bearbeitungsseitigen Anschlägen 26. Damit ist das nächste Rohr 2 in der Warteposition angeordnet. Das an der Dreh- und Vorschubstation 11 eingespannte Rohr 2 wird mittels der Rohrunterstützungen 17 unterfangen und zur Bearbeitung der Laserschneidstation 3 zugeführt.

Die im Laufe der von der Laserschneidstation 3 weg gerichteten Erfassungsbewegung von Dreh- und Vorschubstation 11 und Lichtschranke 19 gewonnenen Informationen werden in mehrerlei Hinsicht zur numerischen Steuerung der maschinellen Anlage 1 genutzt:

Die erfasste Lage des vorderen Endes des in der Wartestellung angeordneten Rohres 2 wird verglichen mit der in der Maschinensteuerung hinterlegten Lage des Positionssensors 18 in Rohrlängsrichtung. Mittels des Positionssensors 18 wird festgestellt, ob ein an der Dreh- und Vorschubstation 11 eingespanntes Rohr 2 vor Beginn seiner Bearbeitung, d.h. vor Beginn seines Vorschubes in Richtung auf den Laserschneidkopf 6, von derjenigen Rohrunterstützung 17 unterfangen wird, welche der Laserschneidstation 3 bzw. dem Durchschiebefutter 8 am nächsten liegt. Ist das Rohr 2 nicht auf der genannten Rohrunterstützung 17 gelagert, ist es also mit seinem vorderen Ende gegenüber der genannten Rohrunterstützung 17 zurückversetzt, so besteht die Gefahr, dass das Rohr 2 bei seinem Vorschub in Richtung auf die Laserschneidstation 3 nicht funktionssicher in das Durchschiebefutter 8 einläuft. In diesem Fall wird mittels des Positionssensors 18 eine Fehlermeldung generiert, aufgrund derer der Vorschub des eingespannten, aber nicht sachgerecht gelagerten Rohres 2 zunächst nicht erfolgen kann.

Durch Vergleich der erfassten Lage des vorderen Endes des in der Warteposition angeordneten Rohres 2 mit der Lage des Positionssensors 18 kann noch während sich das Rohr 2 in der Warteposition befindet, festgestellt werden, ob sich nach der Übergabe des Rohres 2 an die Dreh- und Vorschubstation 11 eine sachgerechte Lagerung des Rohres 2 ergeben wird. Gegebenenfalls kann die Positionierung des in der Warteposition befindlichen Rohres 2 in Rohrlängsrichtung derart korrigiert werden, dass eine spätere, durch den Positionssensor 18 ausgelöste Unterbrechung des Bearbeitungsablaufes vermieden wird.

Die gemessene Länge des in der Warteposition angeordneten Rohres 2 kann beispielsweise insofern zur Optimierung der Rohrbearbeitung genutzt werden, als anhand der gemessenen Rohrlänge eine optimale Verteilung von durch einen Produktionsplan vorgegebenen Rohrteillängen auf mehrere zu bearbeitende Rohre vorgenommen werden kann.

Die Erfassung der Lage, die von dem hinteren Ende des in der Warteposition angeordneten Rohres 2 eingenommen wird, bildet schließlich eine Grundlage für eine optimierte Bewegungssteuerung der Dreh- und Vorschubstation 11. So kann anhand der Lage des hinteren Endes des in der Warteposition angeordneten und aus der Warteposition an die Dreh- und Vorschubstation 11 zu übergebenden Rohres 2 diejenige Position definiert werden, in welche die Dreh- und Vorschubstation 11 nach Beendigung eines Bearbeitungsvorgangs und vor Übernahme des nächsten Rohres 2 zu überführen ist. Insbesondere lässt sich sicherstellen, dass die Dreh- und Vorschubstation 11 in Richtung des Doppelpfeils 13 gesehen keine Position einnimmt, in welcher sie mit den Übergabearmen 25 kollidiert, wenn diese zur Übergabe des an ihnen gelagerten Rohres 2 in den Verfahrweg der Dreh- und Vorschubstation 11 vorgeschoben werden.

Voraussetzung für eine funktionierende Maschinensteuerung ist eine möglichst fehlerfreie Erfassung der Enden des in der Warteposition angeordneten Rohres 2. Zu diesem Zweck sind an der maschinellen Anlage 1 besondere Maßnahmen getroffen.

Die Markierung 29 an der Werkstückaufgabe 27 der Beladeeinheit 10 versetzt den Bediener in die Lage, die zu bearbeitenden Rohre 2 derart auf die Tragstruktur 28 der Beladeeinheit 10 aufzulegen, dass sie nach dem Fördern in die Warteposition mit ihrem hinteren Ende gegenüber dem hinteren Übergabearm 25 vorstehen. Dadurch ist ausgeschlossen, dass ein in der Warteposition befindliches Rohr 2 mit seinem hinteren Ende auf dem genannten Übergabearm 25 zwischen dessen in Rohrlängsrichtung angeordneten Begrenzungen zu liegen kommmt, der Übergabearm 25 also gegenüber dem hinteren Rohrende vorragt. Wäre dies der Fall, so würde beim Abtasten des in der Warteposition angeordneten Rohres 2 mittels der Lichtschranke 19 die Unterbrechung des Lichtstrahls 24 nicht - wie für eine fehlerfreie Rohrendenerfassung erforderlich - am hinteren Rohrende sondern vielmehr an der in Rohrlängsrichtung hinteren Begrenzung des das Rohr 2 lagernden Übergabearms 25 enden. Als hinteres Rohrende würde dann fälschlicherweise die hintere Begrenzung des genannten Übergabearmes 25 erfasst. Zwar ist im Falle der maschinellen Anlage 1 eine als Positionierhilfe dienende Markierung 29 lediglich für den hinteren Übergabearm 25 vorgesehen; grundsätzlich sind derartige Markierungen aber für jeden der Übergabearme 25 denkbar.

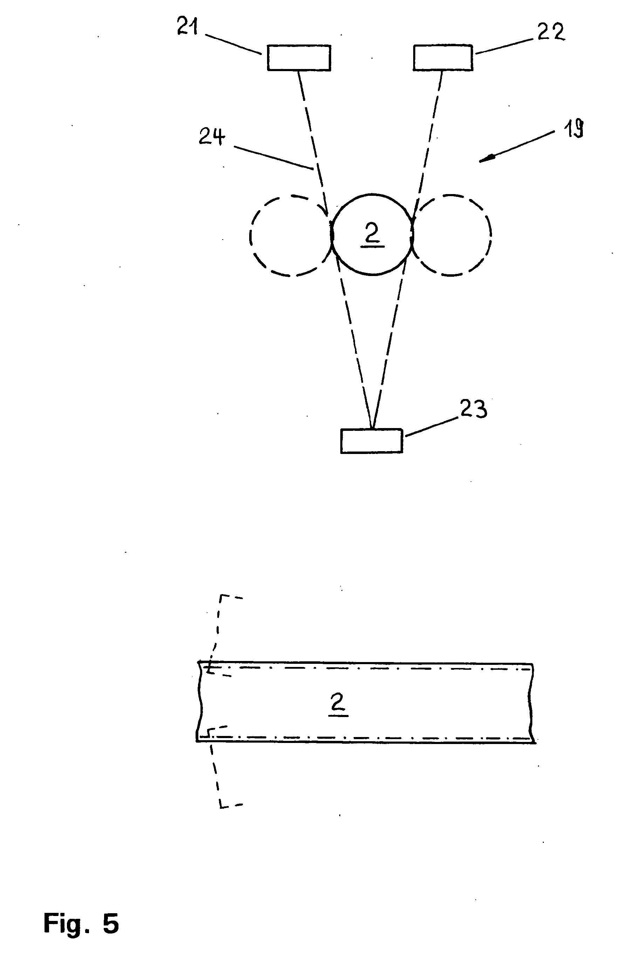

Eine weitere Fehlerquelle bei der Rohrendenerfassung stellen Abweichungen des Ist-Verlaufs der Rohre 2 in Rohrlängsrichtung von dem entsprechenden Soll-Verlauf dar. Dieser Umstand wird im Falle der maschinellen Anlage 1 durch die dort gewählte Ausgestaltung der Lichtschranke 19 berücksichtigt. Der diesbezüglichen Veranschaulichung dient Fig. 5.

Wie in Fig. 5 in gegenüber Fig. 4 vergrößertem Maßstab dargestellt, sind im Falle der Lichtschranke 19 der Strahlsender 21 und der Strahlempfänger 22 in Richtung zu berücksichtigender Abweichungen des Ist- von dem Soll-Verlauf des in der Warteposition angeordneten Rohres 2 gegeneinander versetzt. Demzufolge beschreibt die Ausbreitungsachse des Lichtstrahls 24 einen Winkel, dessen Scheitel an der Oberfläche des Strahlreflektors 23 liegt. Eine Unterbrechung des Lichtstrahls 24 erfolgt daher, wenn das Rohr 2 in dem Ausbreitungsweg beider Schenkel des Lichtstrahls 24 liegt, aber auch dann, wenn das Rohr 2 lediglich im Ausbreitungsweg eines der Strahlschenkel angeordnet ist. Im Querschnitt gesehen, kann die Anordnung des Rohres 2 zwischen den in Fig. 5 gestrichelt angedeuteten Extremlagen variieren, ohne dass eine zuvor erfolgte Unterbrechung des Lichtstrahls 24 beendet oder die Unterbrechung des zuvor nicht unterbrochenen Lichtstrahls 24 verhindert würde. Auf diese Art und Weise ist sichergestellt, dass die Enden eines Rohres 2 auch dann fehlerfrei erfasst werden, wenn das Rohr 2 abweichend von seinem Soll-Verlauf gekrümmt ist. Die untere Teildarstellung von Fig. 5 zeigt mit ausgezogenen Linien den Soll-Verlauf eines Rohres 2. Mit gestrichelten Linien sind Biegungen des Rohres 2 angedeutet, die für eine fehlerfreie Rohrendenerfassung unschädlich sind. Strichpunktiert sind in der unteren Teildarstellung von Fig. 5 die gedachten Bewegungsbahnen der beiden Schenkel der Ausbreitungsachse des Lichtstrahles 24 wiedergegeben. Diese Bewegungsbahnen verlaufen parallel zu der Bewegungsbahn der Dreh- und Vorschubstation 11.

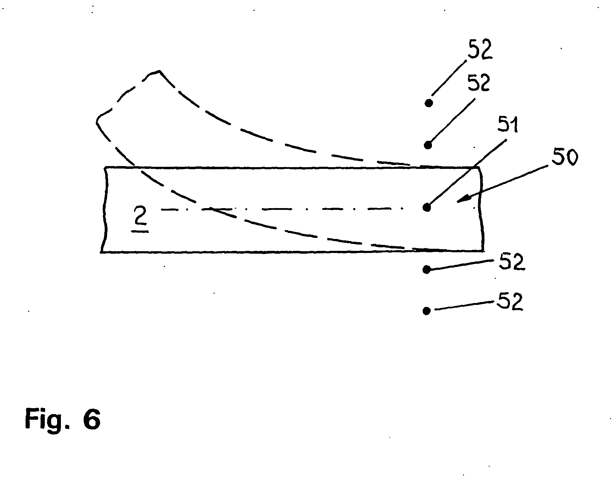

Zusätzlich oder als Alternative zu der Erfassungseinrichtung 33 ist an der maschinellen Anlage 1 eine Erfassungseinrichtung 50 gemäß Fig. 6 mit mehreren in Richtung der zu berücksichtigenden Verlaufsabweichung nebeneinander angeordneten Lichtschranken denkbar. In diesem Fall kann beispielsweise ein Lichtstrahl 51 einer der Lichtschranken als Tast-Lichtstrahl dienen, Lichtstrahlen 52 der übrigen Lichtschranken können die Funktion von Kontroll-Lichtstrahlen übernehmen. Wird ausgehend von den gezeigten Verhältnissen anstelle des Tast-Lichtstrahles 51 einer der Kontroll-Lichtstrahlen 52 unterbrochen, so deutet dies auf eine Biegung des zu vermessenden bzw. zu erfassenden Rohres 2 hin, durch welche die Rohrendenerfassung beeinträchtigt wird. Etwa die Beendigung der Unterbrechung des Tast-Lichtstrahles 51 markiert dann nicht die Lage eines Rohrendes. Eine mit dem Tast-Lichtstrahl 51 vorgenommene Rohrendenerfassung kann als fehlerhaft erkannt werden. Die zu diesem Zweck vorgesehenen und die Kontroll-Lichtstrahlen 52 bereitstellenden Lichtschranken sind Teil einer Verlaufs-Kontrolleinrichtung.

## Patentansprüche

1. zuführvorrichtung für stangen- oder stabartige Werkstücke (2), insbesondere für Rohre, mit einer Werkstückhalterung (11), an welcher ein Werkstück (2) festlegbar und die mit dem daran festgelegten Werkstück (2) mit einer Zuführbewegung längs eines Verfahrweges bewegbar ist sowie mit einer Erfassungseinrichtung (33, 50) zur Erfassung wenigstens eines Endes und/oder der Länge des in einer Warteposition außerhalb des Verfahrweges der Werkstückhalterung (11) angeordneten Werkstückes (2), **dadurch gekennzeichnet, dass** die Erfassungseinrichtung (33, 50) mit der Werkstückhalterung (11) bewegungsverbunden ist und dass die Werkstückhalterung (11) mit der Erfassungseinrichtung (33, 50) unter Erfassen wenigstens eines Endes und/oder der Länge des in der Warteposition angeordneten Werkstücks (2) mit einer Erfassungsbewegung an dem in der Warteposition angeordneten Werkstück (2) entlang bewegbar ist.

2. Zuführvorrichtung nach Anspruch 1, **dadurch gekennzeichnet, dass** die Werkstückhalterung (11) bei der mit dem Werkstück (2) ausgeführten Zuführbewegung und bei der mit der Erfassungseinrichtung (33, 50) ausgeführten Erfassungsbewegung gleichachsig bewegbar ist.

3. Zuführvorrichtung nach einem der vorhergehenden Ansprüche, **dadurch gekennzeichnet, dass** die Werkstückhalterung (11) bei der mit dem Werkstück (2) ausgeführten Zuführbewegung und bei der mit der Erfassungseinrichtung (33, 50) ausgeführten Erfassungsbewegung gleichachsig aber gegenläufig bewegbar ist.

4. Zuführvorrichtung nach einem der vorhergehenden Ansprüche, **dadurch gekennzeichnet, dass** die Erfassungseinrichtung (33, 50) eine insbesondere berührungslose Abtasteinrichtung mit einem Taster umfasst, mittels dessen das in der Wartestellung angeordnete Werkstück (2) bei der mit der Werkstückhalterung (11) ausgeführten Erfassungsbewegung der Erfassungseinrichtung (33, 50) in Werkstückquerrichtung abtastbar, insbesondere berührungslos abtastbar ist.

5. Zuführvorrichtung nach einem der vorhergehenden Ansprüche, **dadurch gekennzeichnet, dass** die Erfassungseinrichtung (33, 50) als Abtasteinrichtung eine Lichtschranke (19) mit einem Taster in Form eines in Werkstückquerrichtung auf das Werkstück (2) richtbaren Tast-Lichtstrahls (24, 51) umfasst.

6. Zuführvorrichtung nach einem der vorhergehenden Ansprüche, **dadurch gekennzeichnet, dass** die Lichtschranke (19) der Erfassungseinrichtung (33) einen Strahlsender (21), einen Strahlempfänger (22) sowie einen Strahlreflektor (23) umfasst, wobei der Strahlsender (21) und der Strahlempfänger (22) an ein und derselben Seite und der Strahlreflektor (23) an der gegenüberliegenden Seite des in der Warteposition angeordneten Werkstücks (2) angeordnet und der Strahlsender (21) und der Strahlempfänger (22) in Richtung einer etwaigen Abweichung des Werkstück-Ist-Verlaufs von dem Werkstück-Sollverlauf voneinander beabstandet sind und wobei von dem Strahlsender (21) in Richtung auf den Strahlreflektor (23) ein Tast-Lichtstrahl (24) ausgesandt wird, der von dem Strahlreflektor (23) zu dem Strahlempfänger (22) reflektierbar ist.

7. Zuführvorrichtung nach einem der vorhergehenden Ansprüche, wobei die Erfassungseinrichtung (50) eine insbesondere berührungslose Abtasteinrichtung mit einem Taster umfasst, mittels dessen das in der Warteposition angeordnete Werkstück (2) in Werkstückquerrichtung abtastbar ist, **dadurch gekennzeichnet, dass** eine Verlaufskontrolleinrichtung vorgesehen ist, mittels derer eine gegenseitige Abweichung einerseits des Verlaufs des in der Warteposition angeordneten Werkstücks (2) in Werkstücklängsrichtung und andererseits des Verlaufs der bei der Erfassungsbewegung von dem Taster der Erfassungseinrichtung (50) längs des Werkstücks (2) beschriebenen Bewegungsbahn gegebenenfalls erfassbar ist.

8. Zuführvorrichtung nach einem der vorhergehenden Ansprüche, **dadurch gekennzeichnet, dass** die Verlaufs-Kontrolleinrichtung eine Lichtschranke mit einem Kontroll-Lichtstrahl (52) umfasst, der gegenüber einem Tast-Lichtstrahl (51) der Erfassungseinrichtung (50) in Richtung einer etwaigen Abweichung des Werkstück-Ist-Verlaufs von dem Werkstück-Sollverlauf versetzt angeordnet ist.

9. Zuführvorrichtung nach einem der vorhergehenden Ansprüche, wobei die Erfassungseinrichtung (33, 50) eine insbesondere berührungslose Abtasteinrichtung mit einem Taster umfasst, mittels dessen das in der Warteposition angeordnete Werkstück (2) in Werkstückquerrichtung abtastbar ist, **dadurch gekennzeichnet, dass** eine Werkstückaufgabe (27) vorgesehen ist, von der ausgehend das Werkstück (2) in die Warteposition förderbar ist, dass für das in der Warteposition angeordnete Werkstück (2) wenigstens ein Werkstückauflager (25) vorgesehen ist, welches das Werkstück (2) in der Abtastrichtung des Tasters lagert und dass an der Werkstückaufgabe (27) eine Positionierhilfe vorgesehen ist, mittels derer das Werkstück (2) an der Werkstückaufgabe (27) in Werkstücklängsrichtung derart positionierbar ist, dass es nach seiner Förderung in die Warteposition mit wenigstens einem zu erfassenden Ende in Werkstücklängsrichtung von dem Werkstückauflager (25) beabstandet ist.

10. Zuführvorrichtung nach einem der vorhergehenden Ansprüche, **dadurch gekennzeichnet, dass** als Positionierhilfe an der Werkstückaufgabe (27) wenigstens eine Anzeige (29) vorgesehen ist, in welche wenigstens eine in Werkstücklängsrichtung gelegene Begrenzung des Werkstückauflagers (25) in Richtung der Bewegungsbahn übertragen ist, die von einem zu erfassenden Ende des Werkstücks (2) bei der Förderung des Werkstücks (2) von der Werkstückaufgabe (27) in die Warteposition beschrieben wird.

11. Maschinelle Anordnung zum Bearbeiten von stangen- oder stabartigen Werkstücken (2), insbesondere von Rohren, mit einer Bearbeitungseinrichtung (3) sowie einer Zuführvorrichtung (4), mittels derer die zu bearbeitenden Werkstücke (2) der Bearbeitungseinrichtung (3) zuführbar sind, **gekennzeichnet durch** eine Zuführvorrichtung (4) nach wenigstens einem der vorhergehenden Ansprüche.

12. Maschinelle Anordnung nach Anspruch 11, **dadurch gekennzeichnet, dass** die Zuführvorrichtung (4) als Werkstückhalterung (11) einen Werkstückvorschub umfasst, mittels dessen zu bearbeitende Werkstücke (2) relativ zu der Bearbeitungseinrichtung (3) bewegbar sind.

13. Maschinelle Anordnung nach Anspruch 11 oder 12, **dadurch gekennzeichnet, dass** der Werkstückvorschub als Dreh- und Vorschubeinrichtung ausgebildet ist, mittels derer zu bearbeitende Werkstücke (2) relativ zu der Bearbeitungseinrichtung (3) in Werkstücklängsrichtung verschiebbar und um eine in Werkstücklängsrichtung verlaufende Achse drehbar sind.

14. Maschinelle Anordnung nach einem der Ansprüche 11 bis 13, **dadurch gekennzeichnet, dass** die Bearbeitungseinrichtung (3) eine Einrichtung zum thermischen Bearbeiten von Werkstücken (2), vorzugsweise einen Laserbearbeitungskopf umfasst.

## Claims

1. Feed device for rod or bar type workpieces (2), especially for pipes, having a workpiece holder (11) to which a workpiece (2) is fixable and which is movable with a feed movement, together with the workpiece (2) fixed thereto, along a traverse path, and having a detection arrangement (33, 50) for detecting at least one end and/or the length of the workpiece (2) arranged in a waiting position outside the traverse path of the workpiece holder (11), **characterised in that** the detection arrangement (33, 50) is connected in respect of movement to the workpiece holder (11) and **in that** the workpiece holder (11) is movable together with the detection arrangement (33, 50), to detect at least one end and/or the length of the workpiece (2) arranged in the waiting position, with a detection movement along the workpiece (2) arranged in the waiting position.

2. Feed device according to Claim 1, **characterised in that** during the feed movement effected together with the workpiece (2) and during the detection movement effected together with the detection arrangement (33, 50) the workpiece holder (11) is movable coaxially.

3. Feed device according to any one of the preceding Claims, **characterised in that** during the feed movement effected together with the workpiece (2) and during the detection movement effected together with the detection arrangement (33, 50), the workpiece holder (11) is movable coaxially yet in the opposite direction.

4. Feed device according to any one of the preceding Claims, **characterised in that** the detection arrangement (33, 50) comprises a scanning device, in particular contactless, with a scanner, by means of which the workpiece (2) arranged in the waiting position is scannable, in particular contactlessly scannable, in the workpiece transverse direction during the detection movement of the detection arrangement (33, 50) effected together with the workpiece holder (11).

5. Feed device according to any one of the preceding Claims, **characterised in that** the detection arrangement (33, 50) comprises a light barrier (19) as the scanning device, having a scanner in the form of a scanning light beam (24, 51) directable in the workpiece transverse direction onto the workpiece (2).

6. Feed device according to any one of the preceding Claims, **characterised in that** the light barrier (19) of the detection arrangement (33) comprises a beam transmitter (21), a beam receiver (22) and also a beam reflector (23), wherein the beam transmitter (21) and the beam receiver (22) are arranged on one and the same side and the beam reflector (23) is arranged on the opposite side of the workpiece (2) arranged in the waiting position, and the beam transmitter (21) and the beam receiver (22) are spaced from one another in the direction of a possible variation of the workpiece actual course from the workpiece desired course and wherein a scanning light beam (24) reflectable by the beam reflector (23) to the beam receiver (22) is transmitted from the beam transmitter (21) towards the beam reflector (23).

7. Feed device according to any one of the preceding Claims, wherein the detection arrangement (50) comprises a scanning device, in particular contactless, with a scanner, by means of which the workpiece (2) arranged in the waiting position is scannable in the workpiece transverse direction, **characterised in that** a course-monitoring device is provided, by means of which a mutual variation on the one hand of the course of the workpiece (2) arranged in the waiting position in the workpiece longitudinal direction and on the other hand of the course of the movement path described during the detection movement by the scanner of the detection arrangement (50) along the workpiece (2) is, if need be, detectable.

8. Feed device according to any one of the preceding Claims, **characterised in that** the course-monitoring device comprises a light barrier with a monitoring light beam (52), which is arranged offset with respect to a scanning light beam (51) of the detection arrangement (50) in the direction of a possible variation of the workpiece actual course from the workpiece desired course.

9. Feed device according to any one of the preceding Claims, wherein the detection arrangement (33, 50) comprises a scanning device, in particular contactless, with a scanner, by means of which the workpiece (2) arranged in the waiting position is scannable in the workpiece transverse direction, **characterised in that** a workpiece feed means (27) is provided, starting from which the workpiece (2) is conveyable into the waiting position, **in that** at least one workpiece support (25) that supports the workpiece (2) in the scanning direction of the scanner is provided for the workpiece (2) arranged in the waiting position, and **in that** on the workpiece feed means (27) a positioning aid is provided, by means of which the workpiece (2) is positionable at the workpiece feed means (27) in the longitudinal direction of the workpiece such that, after being conveyed into its waiting position, the workpiece is spaced, with at least one end to be detected, from the workpiece support (25) in the workpiece longitudinal direction.

10. Feed device according to any one of the preceding Claims, **characterised in that** on the workpiece feed means (27) there is provided as a positioning aid at least one indicator (29), into which at least one limit of the workpiece support (25) disposed in the workpiece longitudinal direction is transferred in the direction of the path of movement that is described by an end of the workpiece (2) to be detected during conveying of the workpiece (2) from the workpiece feed means (27) into the waiting position.

11. Machine arrangement for machining rod or bar type workpieces (2), especially pipes, having a machining device (3) and a feed device (4), by means of which the workpieces (2) to be machined can be fed to the machining device (3), **characterised by** a feed device (4) according to at least one of the preceding Claims.

12. Machine arrangement according to claim 11, **characterised in that** the feed device (4) comprises a workpiece advancing mechanism as the workpiece holder (11), by means of which workpieces (2) to be machined are movable relative to the machining device (3).

13. Machine arrangement according to Claim 11 or 12, **characterised in that** the workpiece advancing mechanism is in the form of a turning and advancing mechanism, by means of which workpieces (2) to be machined are displaceable relative to the machining device (3) in the workpiece longitudinal direction and are rotatable about an axis running in the workpiece longitudinal direction.

14. Machine arrangement according to any one of the Claims 11 to 13, **characterised in that** the machining device (3) comprises a device for thermal machining of workpieces (2), preferably a laser machining head.

## Revendications

1. Dispositif d'alimentation pour des pièces à usiner en forme de barre ou de tige (2), en particulier pour des tubes, avec un support de pièces à usiner (11) auquel peut être fixée une pièce à usiner (2) et qui peut être déplacé avec un mouvement d'alimentation le long d'une course de déplacement avec la pièce à usiner (2) qui est fixée ainsi qu'avec un dispositif de saisie (33, 50) permettant de saisir au moins une extrémité et/ou la longueur de la pièce (2) disposée dans une position d'attente en dehors de la course de déplacement du support de pièces (11), **caractérisé en ce que** le dispositif de saisie (33, 50) est relié cinématiquement au support de pièces (11) et **en ce que** le support de pièces (11) peut être déplacé avec le dispositif de saisie (33, 50) le long de la pièce (2) disposée en position d'attente en saisissant au moins une extrémité et/ou la longueur de la pièce (2) disposée en position d'attente avec un mouvement de saisie.

2. Dispositif d'alimentation selon la revendication 1, **caractérisé en ce que** le support de pièces (11) peut être déplacé sur un axe identique lors du mouvement d'alimentation réalisé avec la pièce (2) et lors du mouvement de saisie réalisé avec le dispositif de saisie (33, 50).

3. Dispositif d'alimentation selon l'une quelconque des revendications précédentes, **caractérisé en ce que** le support de pièces (11) peut être déplacé sur un axe identique mais en sens contraire lors du mouvement d'alimentation réalisé avec la pièce (2) et lors du mouvement de saisie réalisé avec le dispositif de saisie (33, 50).

4. Dispositif d'alimentation selon l'une quelconque des revendications précédentes, **caractérisé en ce que** le dispositif de saisie (33, 50) comprend un dispositif de balayage notamment sans contact doté d'un palpeur, au moyen duquel la pièce (2) disposée en position d'attente peut, lors du mouvement de saisie - réalisé avec le support de pièces (11) - du dispositif de saisie (33, 50), être balayée dans le sens transversal de la pièce, notamment être balayée sans contact.

5. Dispositif d'alimentation selon l'une quelconque des revendications précédentes, **caractérisé en ce que** le dispositif de saisie (33, 50) en tant que dispositif de balayage comprend une barrière lumineuse (19) avec un palpeur en forme de rayon lumineux de balayage (24, 51) dirigeable vers la pièce (2) dans le sens transversal de la pièce.

6. Dispositif d'alimentation selon l'une quelconque des revendications précédentes, **caractérisé en ce que** la barrière lumineuse (19) du dispositif de saisie (33) comprend un émetteur de rayonnement (21), un récepteur de rayonnement (22) ainsi qu'un réflecteur de rayonnement (23), l'émetteur de rayonnement (21) et le récepteur de rayonnement (22) étant agencés d'un seul et même côté et le réflecteur de rayonnement (23) sur le côté opposé de la pièce (2) disposée en position d'attente et l'émetteur de rayonnement (21) et le récepteur de rayonnement (22) étant espacés fun de l'autre dans le sens d'un éventuel écart entre l'allure réelle de la pièce et l'allure théorique de la pièce, et un rayon lumineux de balayage (24) étant émis par l'émetteur de rayonnement (21) en direction du réflecteur de rayonnement(23), lequel rayon lumineux peut être réfléchi par le réflecteur de rayonnement (23) vers le récepteur de rayonnement (22).

7. Dispositif d'alimentation selon l'une quelconque des revendications précédentes, le dispositif de saisie (50) comprenant un dispositif de balayage notamment sans contact doté d'un palpeur, au moyen duquel la pièce (2) disposée en position d'attente peut être balayée dans le sens transversal de la pièce, **caractérisé en ce qu'**un dispositif de contrôle d'allure est prévu, au moyen duquel il est éventuellement possible de saisir un écart relatif entre d'une part l'allure de la pièce (2) disposée en position d'attente dans le sens longitudinal de la pièce et d'autre part l'allure de la trajectoire de déplacement décrit par le palpeur du dispositif de saisie (50) le long de la pièce (2) lors du mouvement de saisie.

8. Dispositif d'alimentation selon l'une quelconque des revendications précédentes, **caractérisé en ce que** le dispositif de contrôle d'allure comprend une barrière lumineuse avec un rayon lumineux de contrôle (52), qui est disposé en décalage par rapport à un rayon lumineux de balayage (51) du dispositif de saisie (50) dans le sens d'un éventuel écart entre l'allure réelle de la pièce et l'allure théorique de la pièce.

9. Dispositif d'alimentation selon l'une quelconque des revendications précédentes, le dispositif de saisie (33, 50) comprenant un dispositif de balayage notamment sans contact doté d'un palpeur, au moyen duquel la pièce (2) disposée en position d'attente peut être balayée dans le sens transversal de la pièce, **caractérisé en ce qu'**un chargement de pièces (27) est prévu, à partir duquel la pièce (2) peut être convoyée en position d'attente, **en ce qu'**au moins un élément d'appui (25) est prévu pour la pièce (2) disposée en position d'attente, lequel élément loge la pièce (2) dans le sens de détection du palpeur, et **en ce que** sur le chargement de pièces (27) est prévue une aide au positionnement au moyen de laquelle la pièce (2) peut être positionnée sur le chargement de pièces (27) dans le sens longitudinal de la pièce de façon telle qu'après son convoyage en position d'attente, elle est espacée de l'élément d'appui (25) dans le sens longitudinal de la pièce avec au moins une extrémité à saisir.

10. Dispositif d'alimentation selon l'une quelconque des revendications précédentes, **caractérisé en ce qu'**au moins un affichage (29) est prévu comme aide au positionnement sur le chargement de pièces (27), auquel affichage est transmise au moins une délimitation de l'élément d'appui (25) - définie dans le sens longitudinal de la pièce - dans le sens de la trajectoire de mouvement qui est décrit par une extrémité à saisir de la pièce (2) lors du convoyage de la pièce (2) du chargement (27) en position d'attente.

11. Ensemble mécanique de traitement de pièces à usiner en forme de barre ou de tige (2), en particulier de tubes, avec un dispositif d'usinage (3) ainsi qu'un dispositif d'alimentation (4), au moyen duquel les pièces à usiner (2) peuvent être amenées au dispositif d'usinage (3), **caractérisé par** un dispositif d'alimentation (4) selon au moins une des revendications précédentes.

12. Ensemble mécanique selon la revendication 11, **caractérisé en ce que** le dispositif d'alimentation (4) présente comme support de pièces (11) un avanceur de pièces au moyen duquel les pièces à usiner (2) peuvent être déplacées par rapport au dispositif d'usinage (3).

13. Ensemble mécanique selon la revendication 11 ou 12, **caractérisé en ce que** l'avanceur de pièces est conçu sous la forme d'un dispositif de rotation et d'avance, au moyen duquel les pièces à usiner (2) peuvent être coulissées par rapport au dispositif d'usinage (3) dans le sens longitudinal de la pièce et peuvent être pivotées autour d'un axe s'étendant dans le sens longitudinal de la pièce.

14. Ensemble mécanique selon l'une quelconque des revendications 11 à 13, **caractérisé en ce que** le dispositif d'usinage (3) comprend un système de traitement thermique des pièces (2), de préférence une tête d'usinage au laser.
